# EUROPEAN PATENT SPECIFICATION

(11) **EP 2 202 022 B1**
(45) Date of publication and mention of the grant of the patent: **01.02.2012**
(21) Application number: 09252889.2
(22) Date of filing: 23.12.2009
(51) Int. Cl.: B23K 3/06, B23K 1/08

(54) **Solder bath and method of heating solder contained in a solder bath**
Lötbad und Verfahren zum Erhitzen von Lötmittel in einem Lötbad
Bain de soudure et procédés pour chauffer la soudure contenue dans le bain de soudure

(30) Priority: 27.12.2008 JP 2008335448
(43) Date of publication of application: 30.06.2010
(73) Proprietor: Senju Metal Industry Co., Ltd, Tokyo 120-8555 (JP)
(72) Inventor: Sato, Issaku, Tokyo 120-8555 (JP); Takaguchi, Akira, Toyama-shi, Toyama 939-2708 (JP)
(74) Representative: Turner, James Arthur

(56) References cited:
- EP-A1- 1 308 232
- EP-A1- 1 734 147
- JP-A- 2005 007 405

## Description

The present invention relates to a solder bath and a method of heating solder contained in a solder bath.

It is well known that a solder bath main body of a solder bath is heated in order to perform temperature control strictly on solder when soldering, for example, a printed circuit board using the solder bath.

For example, Japanese Patent Application Publication NO. 2003-136233 has disclosed an automatic soldering apparatus. In the automatic soldering apparatus, solder contained in the solder bath is heated using a sheathed heater in which a heater is buried in a metallic pipe passing through inside the solder bath (see paragraph (0005) and FIG. 7). The sheathed heater or the like often heats the solder bath main body with the sheathed heater or the like being fixed to an outer surface of the solder bath main body. This is because to heat the solder bath main body with the heater being fixed to an outer surface of the solder bath main body is in less danger of damage in the heater by erosion of the solder than a case of using an immersion heater directly immersed into molten solder so that its life span can be prolonged, thereby being made economical.

Further, Japanese Patent Application Publication NO. H06-41965 has disclosed a solder bath in which inside walls of a solder bath main body are covered by aluminum nitride, which has low solder wettability, and an outer surface of the solder bath main body mounts a heater, an outer surface of which is covered by a heat insulator, in order to allow the solder to be exchanged without re-melting it when exchanging the solder.

Additionally, Japanese Patent Application Publication NOS. H05-18756, H03-254362, S52-127449 and 2005-7405 have also disclosed solder baths, in each of which a heater is mounted with it surrounding a solder bath main body.

In the disclosures in Japanese Patent Application Publication NOS. H06-41965, H05-18756, H03-254362, S52-127449 and 2005-7405, in each of which the heater heats the solder bath main body with the heater being fixed to an outer surface of the solder bath main body, however, a heater-connected part of the outer surface of the solder bath main body is strongly heated to rise in its temperature. A part thereof which is away from a heater, however, rises in little temperature so that temperature in the solder bath main body varies widely, thereby causing the solder contained in the solder bath main body to easily vary in temperature partially. When the temperature of the solder varies, the temperature of the solder flowing out of a discharge nozzle installed inside the solder bath main body also easily varies, thereby resulting in defective soldering with faculty.

Sn/Pb solders have melting point (183 °C or 361.4 °F) of solder alloys while a temperature to be set of the molten solder is usually about 245 °C or 473 °F. Because there is a temperature difference of about 60 °C or 140 °F between them, any trouble does not arise even if the temperature of the solder varies slightly by means of heating by the heater.

Lead-free solder has melting point (about 220 °C or 428 °F) of solder alloys while a temperature to be set of the solder is about 250 °C or 482 °F. There is a temperature difference of merely about 30 °C or 86 °F between them, which is a half of the temperature difference of the Sn/Pb solders. Thus, in the lead-free solder, any soldering defects such as a solder bridge and a lack of solder may occur if the temperature of the solder varies even slightly by means of heating by the heater.

Further, in each of the disclosures in Japanese Patent Application Publication NOS. H06-41965, H05-18756, H03-254362, S52-127449 and 2005-7405, a heater-connected part of the outer surface of the solder bath main body is locally heated to generate any thermal expansions partially. This causes to be shortened the life of the solder bath main body. Any heat for heating the solder bath main body diffuses the outer surface of the solder bath main body into the air, so that the thermal efficiency thereof may deteriorate.

It is desirable to provide a solder bath that is capable of heating the solder contained in the solder bath main body as evenly as possible and melting the solder and a method of heating the solder contained in the solder bath.

Various respective aspects and features of the invention are defined in the appended claims. Combinations of features from the dependent claims may be combined with features of the independent claims as appropriate and not merely as explicitly set out in the claims.

According to an embodiment of the invention, there is provided a solder bath including a solder bath main body that contains solder and a heating member that heats the solder. The heatingmember is mounted on outer surfaces of a bottom and sides of the solder bath main body. The heating member contains a thermal diffusion member that is made of stainless steel, which is mounted on the outer surfaces of the bottom and sides of the solder bath main body, a porous heat insulator that is mounted on and attached to the thermal diffusion member, and a heating element that is buried in the porous heat insulator. The heating element is away from the thermal diffusion member.

According to another embodiment of the invention, there is provided a method of heating solder contained in a solder bath. The method contains the steps of heating a heating element that is buried in a porous heat insulator, which is mounted on outer surfaces of a bottom and sides of the solder bath main body and away from a thermal diffusion member that is made of stainless steel, which is mounted on outer surfaces of a bottom and sides of the solder bath main body, heating the thermal diffusion member by heat of the heating element to heat the solder bath main body evenly through thermal diffusion from the thermal diffusion member up to a constant range of temperature, and heating the solder contained in the solder bath evenly by the solder bath main body heated to the constant range of temperature.

In the embodiments, the heating member mounted on the outer surfaces of the bottom and sides of the solder bath main body and being away from the thermal diffusion member made of stainless steel heats. The thermal diffusion member mounted on the outer surfaces of the bottom and sides of the solder bath main body is then heated by heat conducted from the heating member through, for example, a space between the heating member and the thermal diffusion member. The thermal diffusion member heats the solder bath main body evenly through thermal diffusion up to a constant range of temperature. The solder bath main body heated to the constant range of temperature heats the solder contained in the solder bath evenly.

The thermal diffusion member made of stainless steel has low thermal conductivity so that the heat locally received on one side of the thermal diffusion member is conducted to the other side of the thermal diffusion member with the heat being sufficiently diffused. This enables the heat from the heating member to be conducted to the solder contained in the solder bath main body through whole of the other side of the thermal diffusion member.

Further, in the embodiments, the solder can be lead-free solder and the thermal diffusion member is mounted on the outer surfaces of the sides of the solder bath main body so that an upper end of the thermal diffusion member can be positioned on a level or less of the solder contained in the solder bath main body.

The solder bath main body contains therein a solder-circulating device that has an inlet positioned below a level of the solder contained in the solder bath main body and an outlet positioned above the level of the solder contained in the solder bath main body, and a pump that sends the solder into an inside of the solder-circulating device from the inlet.

According to the embodiments of the invention, it is possible to heat the solder contained in the solder bath main body as evenly as possible and to melt the solder. This can restrain any soldering defects such as a solder bridge and a lack of solder from occurring. This also prevents the life of the solder bath main body from being shortened. According to the embodiments of the invention, the porous heat insulator prevents any heat for heating the solder from escaping from the outer surface of the solder bath main body into the air, so that the thermal efficiency thereof may be improved.

The concluding portion of this specification particularly points out and directly claims the subject matter of the present invention. However, those skilled in the art will best understand both the organization and method of operation of the invention, together with further advantages and obj ects thereof, by reading the remaining portions of the specification in view of the accompanying drawing (s) wherein like reference characters refer to like elements.
FIG. 1A is a sectional view of a solder bath for showing a configuration of an embodiment of the solder bath according to the invention;
FIG. 1B is abottomplan view of the solder bath for showing a configuration of the embodiment of the solder bath according to the invention;
FIG. 2A is a diagram for showing an embodiment of a thermal diffusion member and a porous heat insulator in which a heating resistive element is buried;
FIG. 2B is a sectional view taken along the lines a-a' shown in FIG. 2A;
FIG. 2C is a sectional view taken along the lines b-b' shown in FIG. 2A;
FIG. 3A is a photograph for showing a state of a surface of the thermal diffusion member, which is contacted with a solder bath main body, when the thermal diffusion member is removed from the solder bath main body after the solder bath according to the embodiment of the invention has been used for a predetermined period of time; and
FIG. 3B is a photograph for showing a state of a surface of the thermal diffusion member, which faces a heating resistive element, when the thermal diffusion member is removed from the solder bath main body after the solder bath according to the embodiment of the invention has been used for a predetermined period of time.

The inventors have found that it is possible to heat the solder contained in the solder bath main body as evenly as possible and to melt the solder by followings:
(a) A heating member does not directly heat the solder bath main body but heats the thermal diffusion member made of stainless steel and mounted on the outer surfaces of the bottom and sides of the solder bath main body and the thermal diffusion member heats the solder bath main body through thermal diffusion from the thermal diffusion member; and
(b) A heating resistive element, which is buried in the porous heat insulator that is mounted on and attached to the thermal diffusion member and which is away from the thermal diffusion member heats the thermal diffusion member. They then invent embodiments of the present invention.

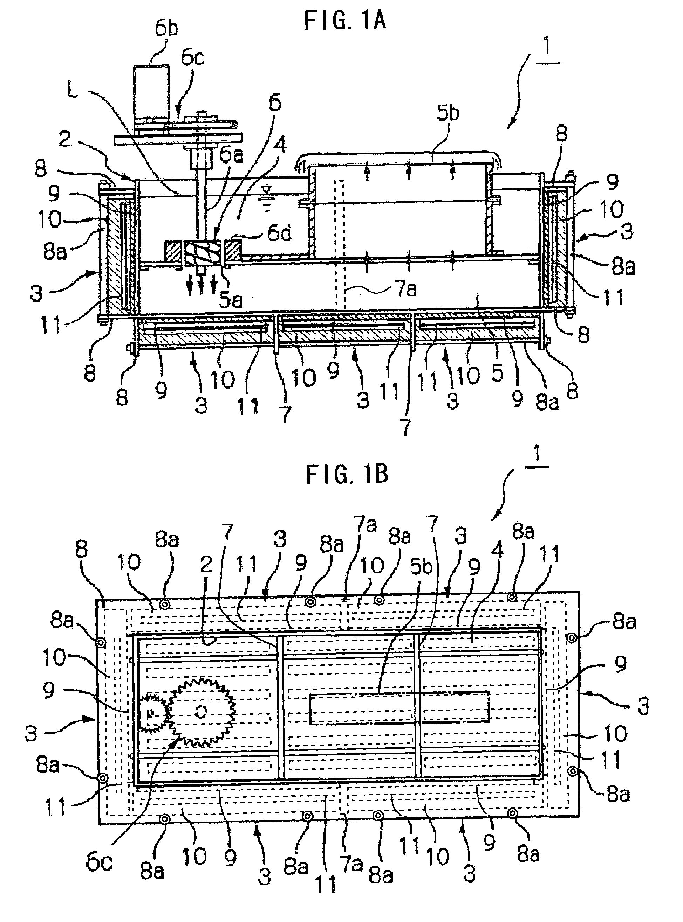

The following will describe the embodiments of the present invention with reference to the drawings. FIGS. 1A and 1B show a configuration of an embodiment of a solder bath 1 according to the invention. The embodiment of the solder bath 1 according to the invention contains a solder bath main body 2 and a heating member 3, which will be described consecutively.

### [Solder Bath Main Body 2]

The solder bath main body 2 is a square container having an upward opening to contain solder 4 and may be a well-known one. For example, it is preferable to make the solder bath main body 2 of stainless steel or nitride an interior of the solder bath main body 2 to prevent any erosion by the solder.

The solder bath main body 2 contains therein a solder-circulating device 5 that has an almost L-shaped section as shown in FIG. 1A and a pump 6.

The solder-circulating device 5 has an inlet 5a positioned at a left along its longitudinal direction (a lateral direction on the drawing) and has an outlet 5b positioned at a right along it. The inlet 5a is positioned below a level L of the solder 4 contained in the solder bath main body 2. The outlet 5b is positioned above the level L of the solder 4 contained in the solder bath main body 2. The outlet 5b functions as a so-called discharge nozzle. The melted solder discharges upward out of the outlet 5b, as shown in FIG. 1A, which enables a printed board, not shown, carried above the outlet 5b to be soldered.

A casing 6d contains the pump 6. A revolving shaft 6a of the pump 6 extends upwards over the solder bath main body 2. A driving source 6c having a driving motor 6b revolves the revolving shaft 6a. This revolution of the pump 6 enables the solder 4 contained in the solder bath main body 2 to be sent into an interior of the solder-circulating device 5 from the inlet 5a and to be discharged from the outlet 5b. It is preferable to use as the pump 6 a screw pump having screws in order to restrain any pulsation from occurring in the sending solder. It is particularly preferable to use a screw pump having four screws in order to restrain any pulsation from occurring in the sending solder when the pump 6 runs at a constant speed or because such a screw pump having four screws has a rapid convergence even when the revolution number of the pump varies. As one embodiment, as shown in FIG. 1A, a case in which the screw pump is used is illustrated, and the screws revolve inside the casing 6d so that the solder 4 is not flown outside from the screw and is sent down in the casing 6d along its passing-through direction. This allows any ripple to be prevented from occurring in the solder flown out of the outlet 5b. Although the embodiment of the solder bath according to the invention applies to the solder bath using the screw pump as shown in this embodiment, the solder bath can apply to any solder baths, no matter how to flow the solder, such as the solder bath, not shown, using a impeller pump and a duct.

Ribs 7 for reinforcement are provided on the outer surface of the bottom of the solder bath main body 2. Ribs 7a for reinforcement are also provided on the outer surfaces of the sides of the solder bath main body 2. Supporting plates 8 are provided on up and down, left and right of the solder bath main body 2. Rods 8a fix a thermal diffusion member 9 which covers the solder bath main body 2 and a porous heat insulator 10 which encloses the heating resistive element 11, between the supporting plates 8.

### [Heating Member 3]

The heating member 3 is mounted on the outer surfaces of the bottom and sides of the solder bath main body 2 and heats the solder 4 contained in the solder bath main body 2.

The heating member 3 contains the thermal diffusion member 9, the porous heat insulator 10 and the heating resistive element 11. The thermal diffusion member 9 is mounted on the outer surfaces of the bottom and sides of the solder bath main body 2 by the rods 8a between the supporting plates 8 together with the porous heat insulator 10 enclosing the heating resistive element 11. Only the thermal diffusion member 9 may be mounted on and applied to the solder bath main body 2 by any suitable method, not shown, such as holding, tightening and welding. The thermal diffusion member 9 is made of stainless steel. The thermal diffusion member 9 has low thermal conductivity so that the heat locally received on one side of the thermal diffusion member 9 from the heating resistive element 11 is conducted to the other side of the thermal diffusion member with the heat being sufficiently diffused. This enables the heat from the heating resistive element 11 to heat the solder bath main body through whole of the other side of the thermal diffusion member. The thermal diffusion member 9 preferably has a thickness of 5 through 10 mm but the thickness thereof may be suitably changed according to any heat capacity or the like of the heating resistive element 11.

It is not necessary to mount the thermal diffusion member 9 on whole of the outer surfaces of the bottom and sides of the solder bath main body 2. There is a broad range of temperature control in a case of Sn/Pb solders, as described above, so that the thermal diffusion member 9 may be mounted on the outer surfaces of the bottom and sides of the solder bath main body 2 below a position of the thermal diffusion member corresponding to a level L or less of the solder 4 contained in the solder bath main body 2. On the other hand, there is a narrow range of temperature control in a case of lead-free solders, as described above, so that the thermal diffusion member 9 is preferably mounted on the outer surfaces of the bottom and sides of the solder bath main body 2 below at least a position of the thermal diffusion member 9 corresponding to a level L or less of the solder 4 contained in the solder bath main body 2.

It is not made easy for uneven in the temperature to occur by making the thermal diffusion member 9 of the same material as that of the solder bath main body 2. Thus, in this embodiment, the thermal diffusion member 9 is made of stainless steel, which is often used as the material of the solder bath main body 2. This cancels such uneven in the temperature to occur in the thermal diffusion member 9 and the solder bath main body 2. It is to be noted that the thermal diffusion member 9 stays near the heating resistive element 11 to be heated so that the thermal diffusion member 9 is subject to any heat damage such as locally expansion. The thermal diffusion member 9, however, is not expensive as compared with that of the solder bath main body 2 so that only the damaged thermal diffusion member 9 may be exchanged. This enables any expense and steps necessary for exchange to be limited.

The porous heat insulator 10 is mounted on and attached to the thermal diffusion member 9. The porous heat insulator 10 is a heat insulator made of ceramic form. The ceramic form is mainly made of alumina and is a porous member having a three-dimensional network such as foamed polyurethane.

The porous heat insulator 10 encloses the heating resistive element 11. This enables the heat generated by the heating resistive element 11 to be effectively conducted into the thermal diffusion member 9, thereby enabling its operation to be inexpensive costly.

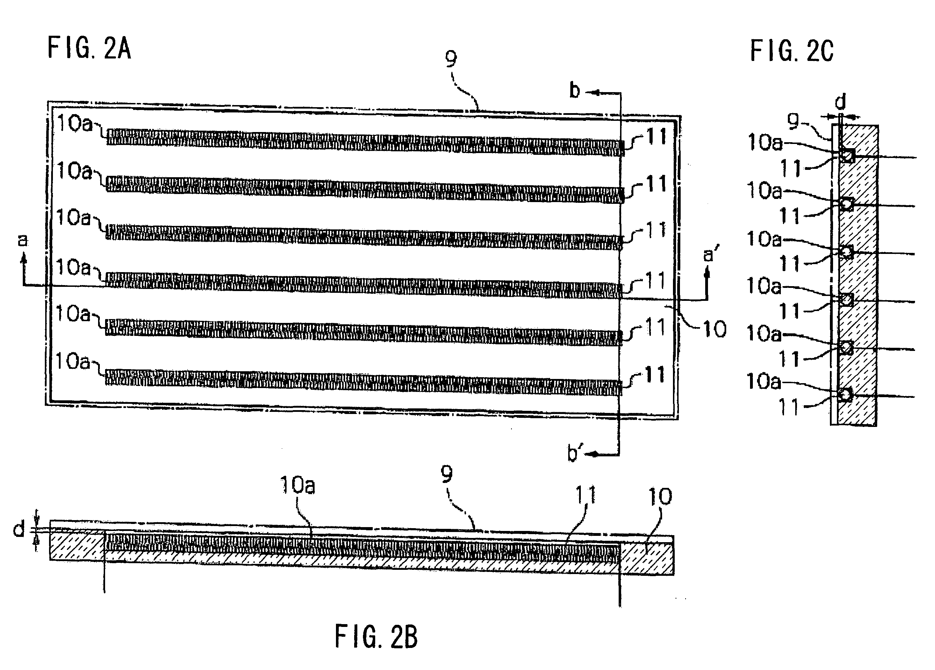

The heating resistive element 11 is buried in the porous heat insulator 10. FIG. 2A through 2C respectively show an embodiment of the thermal diffusion member 9 and the porous heat insulator 10 in which the heating resistive element 11 is buried.

The heating resistive element 11 generates Joule heat when turning on electricity to heat. In this embodiment, Nichrome wire is used as the heating resistive element 11.

As shown in FIGS. 2A through 2C, the heating resistive element 11 is buried in the porous heat insulator 10 so that the heating resistive element 11 is received in a channel 10a having a predetermined depth from a surface of the porous heat insulator 10, the surface of which is attached to the thermal diffusion member 9. The channel has the depth of a small space d, for example, about 5 through 10 mm, plus an outer diameter of the heating resistive element 11.

Thus, the heating resistive element 11 is not directly contacted with the thermal diffusion member 9, but is buried in the porous heat insulator 10 so that the heating resistive element 11 is away from the thermal diffusion member 9. Such a space d may vary suitably according to a thickness of the thermal diffusion member 9 and/or heat capacity of the heating resistive element 11.

In the embodiment of the solder bath 1 according to the invention, when turning on the heating resistive element 11 positioned away from the thermal diffusion member 9 to heat, the heat of the heating resistive element 11 is conducted to the thermal diffusion member 9 to evenly heat a surface of the thermal diffusion member 9, which faces the solder bath main body 2, because the thermal diffusion member 9 is made of stainless steel having low thermal conductivity. The evenly heated surface of the thermal diffusionmember 9 evenly heats the solderbathmainbody 2 connected with the surface of the thermal diffusion member 9. The evenly heated solder bath main body 2 evenly heats the solder contained therein. Thus, according to the above embodiment of the invention, it is possible to restrain uneven heat dispersion and to heat the thermal diffusion member 9 mounted on the solder bath main body 2 evenly up to a constant range of temperature in cooperation with the three points as follows:
(a) The heating resistive element 11 indirectly heats the thermal diffusion member 9 contacted with the solder bath main body 2 by its surface and the thermal diffusion member 9 heats the solder bath main body 2;
(b) The heat generated from the heating resistive element 11 carries evenly through the inside of the porous heat insulator 10 and the heat heats the inside of the porous heat insulator 10 evenly so that the porous heat insulator 10 evenly heats the thermal diffusion member 9 contacted with the solder bath main body 2 by its surface; and
(c) The heating resistive element 11 is not contacted with the thermal diffusion member 9 but is away from the thermal diffusion member 9.

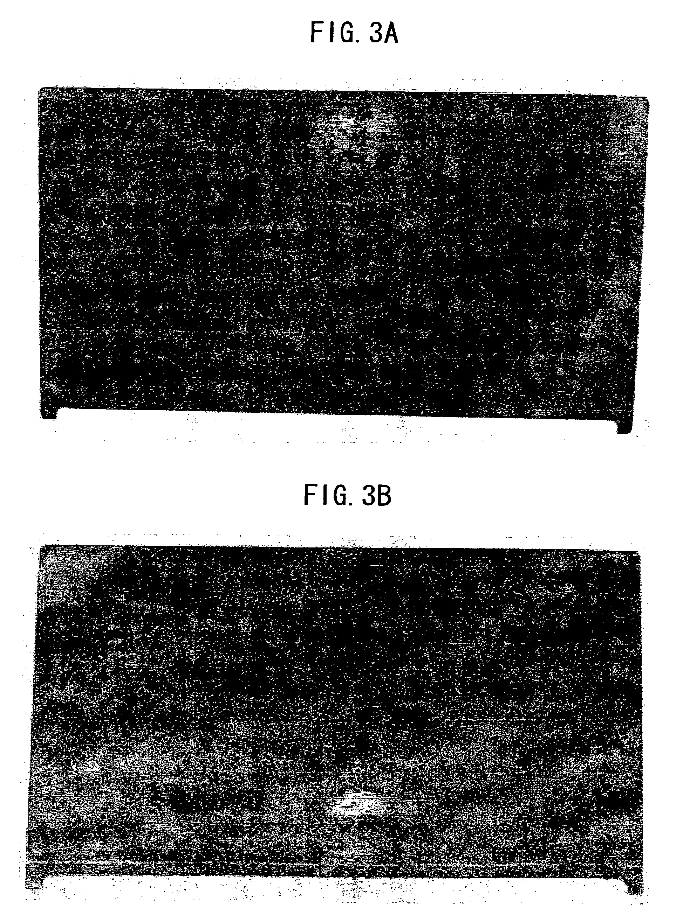

FIG. 3A shows a state of a surface of the thermal diffusion member 9, which is contacted with a solder bath main body 2, when the thermal diffusion member 9 is removed from the solder bath main body 2 after the solder bath 1 according to the embodiment of the invention has been used for a predetermined period of time. FIG. 3B shows a state of a surface of the thermal diffusionmember 9, which faces the heating resistive element 11, when the thermal diffusion member 9 is removed from the solder bath main body 2 after the solder bath 1 according to the embodiment of the invention has been used for a predetermined period of time. As shown in the photographs thereof, the surface of the thermal diffusion member 9, which faces the heating resistive element 11, bears a trace of the heating by the heating resistive element 11, Nichrome wire (see FIG. 3B). On the other hand, the surface of the thermal diffusionmember 9, which is contacted with a solder bath main body 2, bears a diffused trace of the heating (see FIG. 3A).
Thus, according to the embodiments of the invention, it is possible to heat the solder contained in the solder bath main body 2 of the solder bath 1 as evenly as possible by standing the thermal diffusion member 9 between the heating resistive element 11 and the solder bath main body 2 and positioning the heating resistive element 11 away from the thermal diffusion member 9. This prevents any soldering defects such as a solder bridge and a lack of solder from occurring. Further, according to the embodiments of the invention, the solder bath main body is not partially heated, which allows the life of the solder bath main body to be prolonged. The porous heat insulator does not escape any heat for heating the solder bath main body from the outer surface of the solder bath main body into the air, so that the thermal efficiency thereof may be improved.

It should be understood by those skilled in the art that various modifications, combinations, sub-combinations and alternations may occur depending on design requirements and other factors insofar as they are within the scope of the appended claims.

## Claims

1. A solder bath having:
a solder bath main body (2) that in use contains solder (4); and
a heating member that heats the solder, saidheatingmemberbeingmounted on outer surfaces of a bottom and sides of the solder bath main body (2), **characterized in that** the heating member contains a thermal diffusion member (9) that is made of stainless steel, said thermal diffusion member being mounted on the outer surfaces of the bottom and sides of the solder bath main body (2), a porous heat insulator (10) that is mounted on and attached to the thermal diffusion member (9), and a heating element (11) that is buried in the porous heat insulator (10), said heating element (11) being away from the thermal diffusion member (9).

2. The solder bath according to Claim 1 wherein the porous heat insulator contains a heat insulator made of ceramic form; and the heating element contains a heating resistive element.

3. The solder bath according to Claim 1 wherein the solder in use contains lead-free solder and the thermal diffusion member is mounted on the outer surfaces of the sides of the solder bath main body, an upper end of said thermal diffusion member being positioned on a level or less of the solder contained in the solder bath main body.

4. The solder bath according to Claim 1 wherein the solder bath main body contains therein a solder-circulating device that has an inlet positioned below a level of the solder contained in the solder bath main body and an outlet positioned above the level of the solder contained in the solder bath main body; and a pump that sends the solder into an interior of the solder-circulating device from the inlet.

5. The solder bath according to Claim 3 wherein the solder bath main body contains therein a solder-circulating device that has an inlet positioned below the level of the solder contained in the solder bath main body and an outlet positioned above the level of the solder contained in the solder bath main body; and a pump that sends the solder into an interior of the solder-circulating device from the inlet.

6. A method of heating solder contained in a solder bath, **characterized in that** the method includes the steps of:
heating a heating element (11) that is buried in a porous heat insulator (10), said heating element (11) being mounted on outer surfaces of a bottom and sides of the solder bath main body (2) and being away from a thermal diffusion member (9) that is made of stainless steel, said thermal diffusion member (9) being mounted on outer surfaces of a bottom and sides of the solder bath main body (2);
heating the thermal diffusion member (9) by heat of the heating element (11) to heat the solder bath main body (1) evenly through thermal diffusion from the thermal diffusion member (9) up to a constant range of temperature; and
heating the solder (4) contained in the solder bath evenly by the solder bath main body (2) heated to the constant range of temperature.

7. The method according to Claim 6 wherein the porous heat insulator contains a heat insulator made of ceramic form; and the heating element contains a heating resistive element.

8. The method according to Claim 6 wherein the solder contains lead-free solder and the thermal diffusion member is mounted on the outer surfaces of the sides of the solder bath main body, an upper end of said thermal diffusion member being positioned on a level or less of the solder contained in the solder bath main body.

9. The method according to Claim 6 wherein the solder bath main body contains therein a solder-circulating device that has an inlet positioned below a level of the solder contained in the solder bath main body and an outlet positioned above the level of the solder contained in the solder bath main body; and a pump that sends the solder into an interior of the solder-circulating device from the inlet.

10. The method according to Claim 8 wherein the solder bath main body contains therein a solder-circulating device that has an inlet positioned below a level of the solder contained in the solder bath main body and an outlet positioned above the level of the solder contained in the solder bath main body; and a pump that sends the solder into an interior of the solder-circulating device from the inlet.

## Patentansprüche

1. Lötbad mit:
einem Lötbadhauptteil (2), welches in Gebrauch ein Lötmittel (4) enthält, und
ein Heizteil, welches das Lötmittel erhitzt, wobei das Heizteil an äußeren Flächen eines Bodens und der Seiten des Lötbadhauptteiles (2) montiert ist, **dadurch gekennzeichnet, dass** das Heizteil ein Wärmediffusionsteil (9) aufweist, welches aus rostfreiem Stahl hergestellt ist, wobei das Wärmediffusionsteil an den äußeren Oberflächen des Bodens und der Seiten des Lötbadhauptteiles (2) montiert ist, mit einem porösen Wärmeisolator (10), der an dem Wärmediffusionsteil (9) montiert und an diesem angebracht ist, und einem Heizelement (11), welches in den porösen Wärmeisolator (10) eingelassen ist, wobei das Heizelement (11) von dem thermischen Diffusionsteil (9) beabstandet ist.

2. Lötbad nach Anspruch 1, wobei der poröse Wärmeisolator einen aus einer Keramik hergestellten Isolator enthält und wobei das Heizelement ein Heizwiderstandselement aufweist.

3. Lötbad nach Anspruch 1, wobei das Lötmittel in Gebrauch bleifreies Lot enthält und das thermische Diffusionsteil an äußeren Oberflächen der Seiten des Lötbadhauptteiles montiert ist, wobei ein oberes Ende des Wärmediffusionsteiles auf einem Niveau unterhalb eines Niveaus des in dem Lötbadhauptteiles enthaltenen Lötmittels angeordnet ist.

4. Lötbad nach Anspruch 1, wobei das Lötbadhauptteil eine Lötmittelumwälzeinrichtung aufweist, die einen Einlass unterhalb eines Niveaus des in dem Lötbadhauptteiles enthaltenen Lötmittels und einen Auslass oberhalb des Niveaus des in dem Lötbadhauptteil enthaltenen Lötmittels aufweist, sowie eine Pumpe, die das Lötmittel von dem Einlass in das Innere der Lötmittelumwälzeinrichtung schickt.

5. Lötbad nach Anspruch 3, wobei das Lötbadhauptteil eine Lötmittelumwälzeinrichtung aufweist, die einen Einlass unterhalb eines Niveaus des in dem Lötbadhauptteiles enthaltenen Lötmittels und einen Auslass oberhalb des Niveaus des in dem Lötbadhauptteil enthaltenen Lötmittels aufweist, sowie eine Pumpe, die das Lötmittel von dem Einlass in das Innere der Lötmittelumwälzeinrichtung schickt.

6. Verfahren zum Heizen eines Lötmittels, welches in einem Lötmittelbad enthalten ist, **dadurch gekennzeichnet, dass** das Verfahren die Schritte aufweist:
Erhitzen eines Heizelementes (11), welches in einen porösen Wärmeisolator (10) eingebettet ist, wobei das Heizelement (11) auf äußeren Oberflächen des Bodens und der Seiten des Lötbadhauptteiles (1) montiert ist und von einem Wärmediffusionsteil (9), welches aus rostfreiem Stahl hergestellt ist, beabstandet ist, wobei das Wärmediffusionsteil (9) auf der äußeren Oberfläche des Bodens und der Seiten des Lötbadhauptteiles (2) montiert ist, Erhitzen des Wärmediffusionsteiles (9) durch Wärme von dem Heizelement (11), um das Lötbadhauptteil (2) gleichmäßig durch Wärmediffusion von dem Wärmediffusionsteil (9) bis auf einen konstanten Temperaturbereich aufzuheizen, und Heizen des Lötmittels (4), welches in dem Lötmittelbad enthalten ist, gleichmäßig, indem das Lötmittelhauptteil (2) auf den konstanten Temperaturbereich aufgeheizt wird.

7. Verfahren nach Anspruch 6, wobei der poröse Wärmeisolator einen aus Keramik gebildeten Wärmeisolator aufweist und das Heizelement ein Heizwiderstandselement aufweist.

8. Verfahren nach Anspruch 6, wobei das Lotmittel lösungsmittelfreies Lot enthält und das Wärmediffusionsteil an den äußeren Oberflächen der Seiten des Lötmittelhauptteiles montiert ist, wobei ein oberes Ende des Wärmediffusionsteils auf einem Niveau oder unterhalb eines Niveaus des in dem Lötbadhauptteiles enthaltenen Lotes angeordnet ist.

9. Verfahren nach Anspruch 6, wobei das Lötbadhauptteil eine Lötmittelumwälzeinrichtung aufweist, die einen Einlass unterhalb eines Niveaus des in dem Lötbadhauptteiles enthaltenen Lötmittels und einen Auslass oberhalb des Niveaus des in dem Lötbadhauptteil enthaltenen Lötmittels aufweist, sowie eine Pumpe, die das Lötmittel von dem Einlass in das Innere der Lötmittelumwälzeinrichtung schickt.

10. Verfahren nach Anspruch 8 wobei das Lötbadhauptteil eine Lötmittelumwälzeinrichtung aufweist, die einen Einlass unterhalb eines Niveaus des in dem Lötbadhauptteiles enthaltenen Lötmittels und einen Auslass oberhalb des Niveaus des in dem Lötbadhauptteil enthaltenen Lötmittels aufweist, sowie eine Pumpe, die das Lötmittel von dem Einlass in das Innere der Lötmittelumwälzeinrichtung schickt.

## Revendications

1. Bain de brasure comportant :
un corps principal de bain de brasure (2) qui, en utilisation, contient de la brasure (4) ; et
un organe chauffant qui chauffe la brasure, ledit organe chauffant étant monté sur des surfaces externes d'un fond et des côtés du corps principal de bain de brasure (12),
**caractérisé en ce que** l'organe chauffant contient un organe de diffusion thermique (9) qui est fabriqué en acier inoxydable, ledit organe de diffusion thermique étant monté sur les surfaces externes du fond et des côtés du corps principal de bain de brasure (2), un isolant thermique poreux (10) qui est monté et arrimé sur l'organe de diffusion thermique (9), et un élément chauffant (11) qui est enfoui dans l'isolant thermique (10), ledit élément chauffant (11) étant éloigné de l'organe de diffusion thermique (9).

2. Bain de brasure selon la revendication 1, dans lequel l'isolant thermique poreux contient un isolant thermique de forme céramique ; et l'élément chauffant contient un élément chauffant résistif.

3. Bain de brasure selon la revendication 1, dans lequel la brasure en utilisation contient de la brasure sans plomb et l'organe de diffusion thermique est monté sur les surfaces externes des côtés du corps principal de bain de brasure, une extrémité supérieure dudit organe de diffusion thermique étant positionnée au même niveau ou plus bas que la brasure contenue dans le corps principal de bain de brasure.

4. Bain de brasure selon la revendication 1, dans lequel le corps principal de bain de brasure contient en son intérieur un dispositif de circulation de brasure, qui comporte un orifice d'entrée positionné sous un niveau de la brasure contenue dans le corps principal de bain de brasure et un orifice de sortie positionné au-dessus du niveau de la brasure contenue dans le corps principal de bain de brasure ; ainsi qu'une pompe qui envoie la brasure dans un intérieur du dispositif de circulation de brasure depuis l'orifice d'entrée.

5. Bain de brasure selon la revendication 3, dans lequel le corps principal de bain de brasure contient en son intérieur un dispositif de circulation de brasure, qui comporte un orifice d'entrée positionné sous le niveau de la brasure contenue dans le corps principal de bain de brasure et un orifice de sortie positionné au-dessus du niveau de la brasure contenue dans le corps principal de bain de brasure ; ainsi qu'une pompe qui envoie la brasure dans un intérieur du dispositif de circulation de brasure depuis l'orifice d'entrée.

6. Procédé permettant de chauffer de la brasure contenue dans un bain de brasure, **caractérisé en ce que** le procédé comprend les étapes consistant à :
chauffer un élément chauffant (11) qui est enfoui dans un isolant thermique poreux (10), ledit élément chauffant (11) étant monté sur des surfaces externes d'un fond et des côtés du corps principal de bain de brasure (2) et étant éloigné d'un organe de diffusion thermique (9) qui est fabriqué en acier inoxydable, ledit élément de diffusion thermique (9) étant monté sur des surfaces externes d'un fond et des côtés du corps principal de bain de brasure (2) ;
chauffer l'organe de diffusion thermique (9) par l'intermédiaire de la chaleur de l'élément chauffant (11) afin de chauffer le corps principal de bain de brasure (2) uniformément pendant la diffusion thermique depuis l'organe de diffusion thermique (9) jusqu'à une plage constante de température ; et
chauffer la brasure (4) contenue dans le bain de brasure uniformément par l'intermédiaire du corps principal de bain de brasure (2) chauffé à la plage constante de température.

7. Procédé selon la revendication 6 dans lequel l'isolant thermique poreux contient un isolant thermique de forme céramique ; et l'élément chauffant contient un élément chauffant résistif.

8. Procédé selon la revendication 6, dans lequel la brasure contient de la brasure sans plomb et l'organe de diffusion thermique est monté sur les surfaces externes des côtés du corps principal de bain de brasure, une extrémité supérieure dudit organe de diffusion thermique étant positionné au même niveau ou plus bas que la brasure contenue dans le corps principal de bain de brasure.

9. Procédé selon la revendication 6, dans lequel le corps principal de bain de brasure contient en son intérieur un dispositif de circulation de brasure qui comporte un orifice d'entrée positionné sous un niveau de la brasure contenue dans le corps principal de bain de brasure et un orifice de sortie positionné au-dessus du niveau de la brasure contenue dans le corps principal de bain de brasure ; ainsi qu'une pompe qui envoie la brasure dans un intérieur du dispositif de circulation de brasure depuis l'orifice d'entrée.

10. Dispositif selon la revendication 8, dans lequel le corps principal de bain de brasure contient en son intérieur un dispositif de circulation de brasure qui comporte un orifice d'entrée positionné sous un niveau de la brasure contenue dans le corps principal de bain de brasure et un orifice de sortie positionné au-dessus du niveau de la brasure contenue dans le corps principal de bain de brasure ; ainsi qu'une pompe qui envoie la brasure dans un intérieur du dispositif de circulation de brasure depuis l'orifice d'entrée.
